# FASCICULE DE BREVET EUROPEEN

(11) **EP 3 778 382 B1**
(45) Date de publication et mention de la délivrance du brevet: **27.09.2023**
(21) Numéro de dépôt: 20188986.2
(22) Date de dépôt: 31.07.2020
(51) Int. Cl.: B64C 7/02, B64D 29/00

(54) **PARTIE ANTÉRIEURE DE NACELLE D'UN ENSEMBLE PROPULSIF D'AÉRONEF DONT LE CADRE AVANT EST LIÉ À UNE PAROI EXTÉRIEURE SANS LA TRAVERSER**
FRONTTEIL EINER GONDEL EINER ANTRIEBSGRUPPE EINES LUFTFAHRZEUGS, DESSEN FRONTRAHMEN MIT EINER AUSSENWAND VERBUNDEN IST, OHNE DIESE ZU DURCHDRINGEN
FORWARD SECTION OF NACELLE OF AN AIRCRAFT PROPULSION ASSEMBLY IN WHICH THE FRONT FRAME IS CONNECTED TO AN OUTER WALL WITHOUT PENETRATING IT

(30) Priorité: 13.08.2019 FR 1909180
(43) Date de publication de la demande: 17.02.2021
(73) Titulaire: AIRBUS OPERATIONS (S.A.S.), 31060 Toulouse (FR)
(72) Inventeur: PORTE, Alain, 31060 TOULOUSE Cedex 9 (FR); VINCHES, Frédéric, 31060 TOULOUSE Cedex 9 (FR); LALANE, Jacques, 31060 TOULOUSE Cedex 9 (FR); ALBET, Gregory, 31060 TOULOUSE Cedex 9 (FR)
(74) Mandataire: Jardel, Marc Henry Philippe

(56) Documents cités:
- EP-A2- 2 578 496
- FR-A1- 3 074 149
- US-A1- 2011 131 945

## Description

La présente invention concerne les ensembles propulsifs d'aéronef et plus particulièrement les nacelles des ensembles propulsifs d'aéronef.

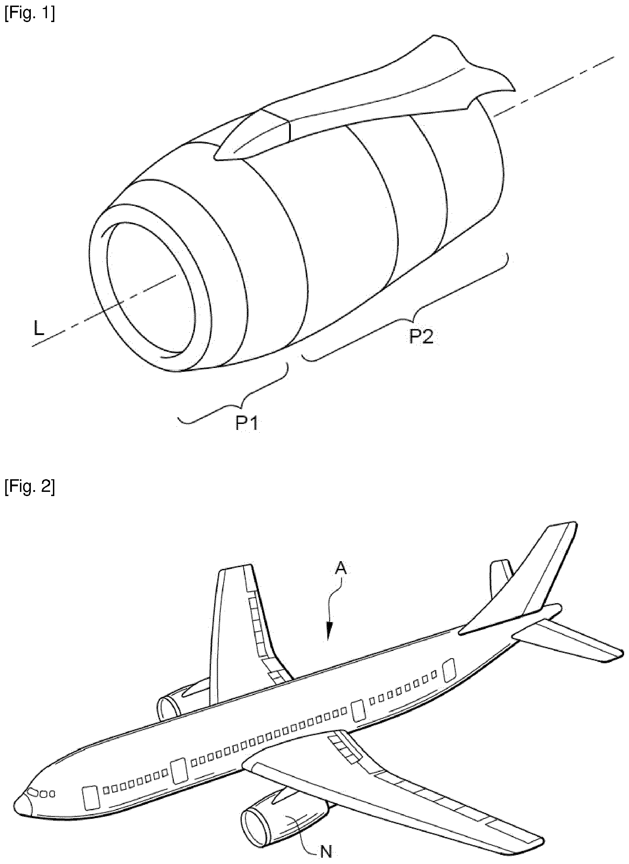

Un ensemble propulsif est un dispositif permettant de générer une poussée, qui constitue la force motrice de l'aéronef équipé de l'ensemble propulsif. Un ensemble propulsif d'aéronef est représenté à titre d'exemple à la figure 1.

Un exemple d'implantation classique d'une nacelle N d'un ensemble propulsif sur un aéronef A est représenté à la figure 2.

La nacelle comporte classiquement une partie antérieure P1 formant entrée d'air. La partie antérieure P1 a pour rôle de capter l'air de façon à assurer un écoulement régulier vers la soufflante. La nacelle comporte par ailleurs une partie principale P2, constituant le reste de ladite nacelle.

L'ensemble propulsif s'étend généralement autour d'un axe appelé par la suite axe longitudinal L. Du fait de la forme sensiblement cylindrique qu'a généralement la nacelle autour de l'axe longitudinal L, toute droite sécante de l'axe L perpendiculairement à ce dernier est dite radiale.

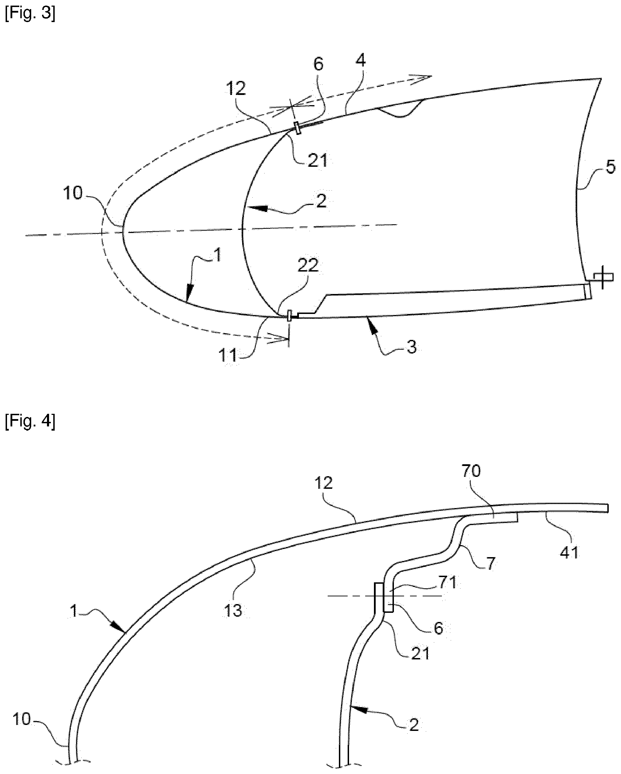

Une structure classique de partie antérieure P1 de nacelle d'ensemble propulsif d'aéronef, telle que connue dans l'état de la technique, est décrite en référence à la figure 3.

La partie antérieure P1 de la nacelle comprend une lèvre d'entrée d'air 1, pouvant être annulaire ou sensiblement annulaire et qui est disposée à son extrémité avant. La lèvre d'entrée d'air 1 comprend un bord d'attaque 10 pouvant être circulaire ou sensiblement circulaire. On entend par bord d'attaque le bord le plus en avant de la lèvre d'entrée d'air lorsque la nacelle est montée, et qui sépare l'extrados de l'intrados du profil aérodynamique de la nacelle. Le bord d'attaque 10 constitue généralement la ligne à l'avant de la nacelle où le rayon de courbure de la surface de la nacelle est minimal. La lèvre d'entrée d'air 1 comprend deux parties, une partie intérieure 11 et une partie extérieure 12, délimitées par le bord d'attaque. Dans les exemples illustrés, les parties extérieure et intérieure sont sensiblement symétriques par rapport au bord d'attaque 10. Bien entendu, dans un autre exemple, la partie extérieure 12 peut présenter une section plus grande que celle de la partie intérieure 11, ou inversement.

Dans l'ensemble du présent document, les notions d'« avant » et d'« arrière », d'« antérieur » et de « postérieur » ainsi que d'« amont » et d'« aval » se comprennent selon la direction du flux d'air dans l'ensemble propulsif. Ainsi, l'air entre par l'avant de l'ensemble propulsif, c'est-à-dire par la partie antérieure P1 de la nacelle et ressort (après qu'une partie de l'air ait servi en tant que comburant) par l'arrière de l'ensemble propulsif, c'est-à-dire par l'extrémité arrière de la partie principale P2.

En outre, dans l'ensemble du présent document, un élément « extérieur » désigne un élément radialement éloigné de l'axe longitudinal L, formant typiquement la limite du volume hors tout de la nacelle, tandis qu'un élément « intérieur » désigne un élément proche de l'axe longitudinal L. Par exemple, les flux primaire et secondaire d'un ensemble propulsif d'aéronef s'écoulent dans le conduit intérieur formé par la nacelle de l'ensemble propulsif.

La notion d'interne (à l'inverse de la notion d'externe) à la nacelle désigne la zone située dans l'épaisseur du profil aérodynamique formant ladite nacelle.

Selon la structure classique d'une partie antérieure P1 de l'ensemble propulsif, un cadre avant 2 est disposé à l'arrière de la lèvre d'entrée d'air 1. L'ensemble formé par la lèvre d'entrée d'air 1 et le cadre avant 2, appelé ensemble « D-duct », du fait de sa section en « D », assure généralement une fonction de dégivrage au moyen d'air chaud amené du moteur par un tube d'alimentation à l'intérieur de cet ensemble.

Une structure intérieure 3 prolonge vers l'arrière la partie intérieure 11 de la lèvre d'entrée d'air 1. La structure intérieure 3 peut correspondre à un panneau insonorisant, ou toute autre forme de paroi définissant un conduit canalisant l'air en direction de la motorisation située dans la partie principale de la nacelle.

Un panneau extérieur 4 prolonge vers l'arrière la partie extérieure 12 de la lèvre d'entrée d'air 1.

Dans la suite, on désignera par paroi extérieure l'ensemble formé par la partie extérieure 12 de la lèvre d'entrée d'air 1 et le panneau extérieur 4.

Dans le présent document, il est fait la distinction entre la lèvre d'entrée d'air 1 et le panneau extérieur 4, et les modes de réalisation de l'invention présentés comportent une paroi extérieure formée de deux pièces distinctes (à savoir la partie extérieure 12 de la lèvre d'entrée d'air 1 et le panneau extérieur 4) liées entre elles par des moyens d'assemblage. Toutefois, dans certains modes de réalisation, la paroi extérieure peut être monobloc, de sorte que la lèvre d'entrée d'air 1 et le panneau extérieur 4 constituent deux portions d'une même pièce appelée paroi extérieure.

Le cadre avant 2 comprend un premier bord périphérique 21 et un deuxième bord périphérique 22. Le premier bord périphérique 21 est fixé à la paroi extérieure de la partie antérieure et le deuxième bord périphérique 22 est fixé à la structure intérieure 3. Un cadre de rigidification 5 également appelé cadre arrière définit la limite entre la partie antérieure P1 et la partie principale P2 de la nacelle.

La présente invention porte en particulier sur la liaison entre le cadre avant 2 et la paroi extérieure. Cette liaison est réalisée sur des lignes périphériques de fixation ou moyens d'assemblage 6, que l'on peut désigner par l'expression « coutures orbitales », par rivetage du cadre avant 2 au travers de l'épaisseur de la paroi extérieure.

En pratique, la lèvre d'entrée d'air 1 ou le panneau extérieur 4 sont rivetés au bord périphérique 21 du cadre avant 2. Optionnellement, les rivets 6 peuvent former une liaison rigide commune entre la lèvre d'entrée d'air 1, le panneau extérieur 4 et le cadre avant 2.

Néanmoins, les rivets qui sont employés dans la liaison entre le cadre avant 2 et la paroi extérieure forment des irrégularités sur une surface externe de la nacelle, susceptibles de perturber l'écoulement de l'air. En particulier, le caractère laminaire de l'écoulement sur la surface externe de la nacelle peut être perturbé localement par les rivets 6, qui par nature forment de légers creux et/ou bosses sur la surface aérodynamique. Plus généralement, toute discontinuité radiale et/ou axiale, à la surface externe de la nacelle ou à l'interface de deux panneaux ou ensembles d'une surface aérodynamique, est susceptible de perturber le bon glissement des couches d'air sur la surface aérodynamique.

Toute perturbation du caractère laminaire du flux d'air peut générer une trainée supplémentaire, qui réduit l'efficacité énergétique de l'aéronef considéré. En particulier, pour la partie antérieure d'une nacelle d'un groupe propulseur d'aéronef, également appelée entrée d'air, la liaison entre le cadre avant et la paroi extérieure constitue l'une des premières ruptures physiques dans les lignes aérodynamiques de la nacelle et une importante source de trainée parasite.

L'invention vise à réduire les perturbations aérodynamiques sur la partie antérieure d'une nacelle de groupe propulsif d'aéronef par une optimisation de la liaison entre le cadre avant et la paroi extérieure.

Le document US2011131945 décrit une structure d'entrée d'air dans laquelle une partition interne 9 est fixé à la paroi extérieure par l'intermédiaire d'un élément de connexion de type raidisseur ou peau structurale rempli d'un matériau poreux qui ont le désavantage d'alourdir et rigidifier la paroi extérieure.

Ainsi, l'invention concerne une partie antérieure de nacelle d'un ensemble propulsif d'aéronef, la partie antérieure ayant une extrémité avant permettant l'entrée d'air et une extrémité arrière destinée à être liée au reste de la nacelle, la partie antérieure comprenant :
- une lèvre d'entrée d'air disposée à l'extrémité avant et comprenant un bord d'attaque, une partie extérieure, et une partie intérieure délimitées par le bord d'attaque,
- un panneau extérieur prolongeant la partie extérieure de la lèvre d'entrée d'air, le panneau extérieur et la partie extérieure de la lèvre d'entrée d'air formant ensemble une paroi extérieure de la partie antérieure,
- une structure intérieure prolongeant la partie intérieure de la lèvre d'entrée d'air,
- un cadre avant disposé à l'arrière de la lèvre d'entrée d'air et reliant la paroi extérieure à ladite structure intérieure, ledit cadre avant comprenant un premier bord périphérique lié à ladite paroi extérieure et un deuxième bord périphérique lié à ladite structure intérieure et/ou à la partie intérieure de la lèvre d'entrée d'air,
- un élément de montage de la paroi extérieure de la partie antérieure s'étendant à l'intérieur de la partie antérieure et saillant d'une surface interne de la partie antérieure. Selon l'invention, le cadre avant et l'élément de montage de la paroi extérieur de la partie antérieur sont liés entre eux par des moyens d'assemblage situés à l'intérieur de la partie antérieure de sorte que les moyens d'assemblage ne traversent pas la paroi extérieure. L'élément de montage se présente sous la forme d'une patte de fixation dont une deuxième extrémité est fixée au premier bord périphérique du cadre avant par les moyens d'assemblage. Selon l'invention, l'élément de montage est formé d'un seul tenant avec la lèvre d'entrée d'air ou le panneau extérieur, et ladite lèvre d'entrée d'air ou ledit panneau extérieur présente une forme de Y.

La partie antérieure ainsi constituée et en particulier la liaison entre le cadre avant et la paroi extérieure par des moyens d'assemblage situés à l'intérieur de la partie antérieure, permet d'assurer la continuité de la surface aérodynamique de la partie antérieure de la nacelle. Cela assure un écoulement laminaire de l'air à la surface externe de la partie antérieure et réduit la trainée. De plus, la forme de patte permet d'alléger la structure et d'éviter de rigidifier la paroi extérieure pour conserver l'écoulement laminaire en cas de déformation.

Dans un exemple non revendiqué, l'élément de montage peut être une pièce rapportée à la paroi extérieure, et assemblée à la paroi extérieure par des moyens de fixation non traversant, par exemple par soudure ou brasure.

Dans un exemple non revendiqué, l'élément de montage peut être une cornière, ou un élément raidisseur.

Les moyens d'assemblage peuvent être des éléments de fixation rapportés, par exemple des rivets.

Le premier bord périphérique du cadre avant peut être lié à la paroi extérieure par soudure brasure ou collage, la soudure, brasure ou le collage formant les moyens d'assemblage.

La paroi extérieure peut comprendre un logement configuré pour recevoir et maintenir fixe le premier bord périphérique du cadre avant par complémentarité de forme, le logement formant au moins en partie les moyens d'assemblage.

Le cadre avant peut comporter au moins deux parties radiales, les parties radiales étant assemblées entre elles par des éléments de fixation démontables.

L'invention concerne également une nacelle de groupe propulsif d'aéronef comportant une partie antérieure présentant les caractéristiques précédentes.

D'autres particularités et avantages de l'invention apparaîtront encore dans la description ci-après en référence aux dessins annexés, donnés à titre d'exemples non limitatifs :
[Fig. 1] la figure 1 représente selon une vue schématique en trois dimensions un ensemble propulsif d'aéronef ;
[Fig. 2] la figure 2 représente un aéronef selon une vue schématique en trois dimensions,
[Fig. 3] la figure 3 représente selon une vue partielle de principe en coupe une partie antérieure d'une nacelle d'ensemble propulsif d'aéronef conforme à l'art antérieur ; et
[Fig. 4]

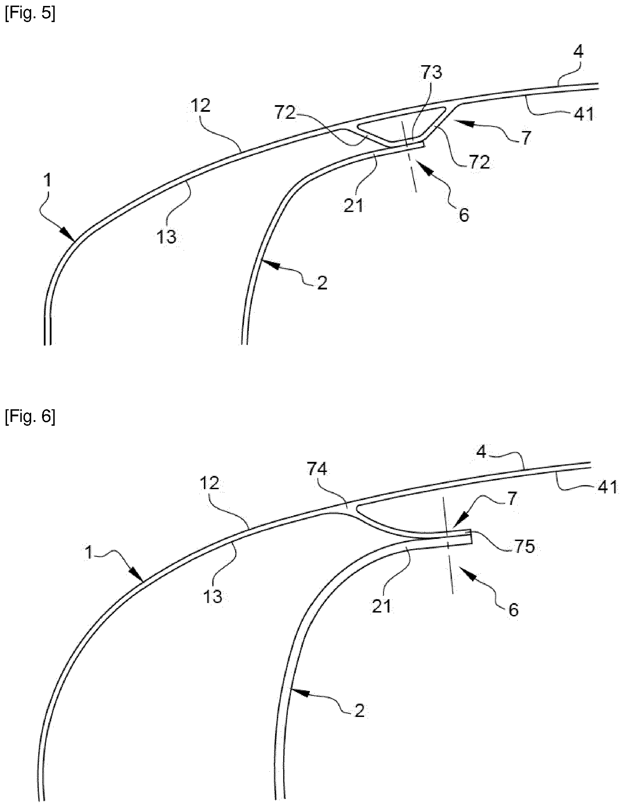

[Fig. 5] les figures 4 et 5 représentent selon des vues de détail en coupe, des exemples d'assemblage entre un cadre avant et une paroi extérieure d'une partie antérieure de nacelle, ces exemples étant non revendiqués,
[Fig. 6]

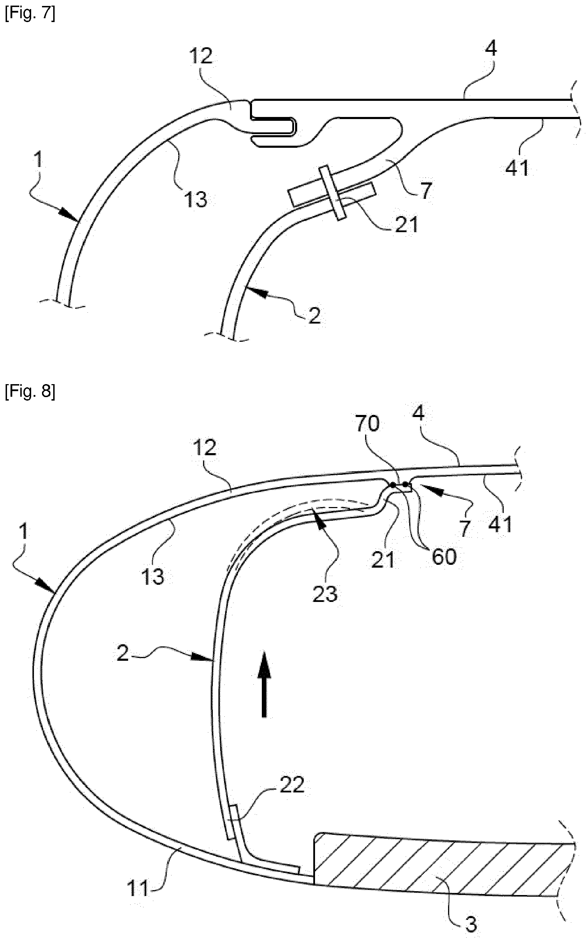

[Fig. 7] les figures 6 et 7 représentent selon des vues de détail en coupe, des exemples d'assemblage entre un cadre avant et une paroi extérieure d'une partie antérieure de nacelle, chaque exemple étant conforme à un mode de réalisation distinct,
[Fig. 8]

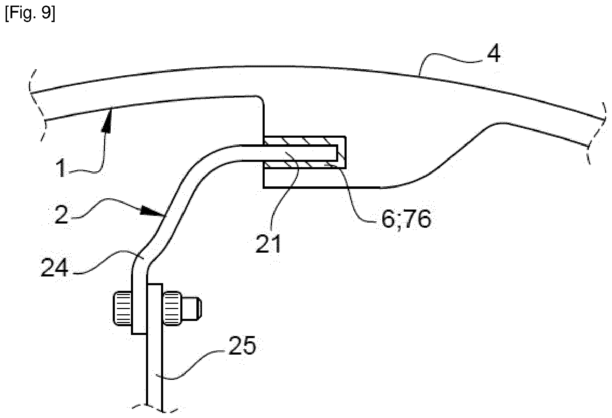

[Fig. 9] les figures 8 et 9 représentent selon des vues de détail en coupe, des exemples d'assemblage entre un cadre avant et une paroi extérieure d'une partie antérieure de nacelle, ces exemples étant non revendiqués.

Les figures 1 à 3, présentant des généralités sur les ensembles propulsifs d'aéronef et une configuration de partie antérieure de nacelle conforme à l'état de la technique ont été décrites ci-avant, en préambule du présent document Les mêmes références que celles employées dans la description des figures 1 à 3 sont utilisées pour désigner les mêmes éléments dans la suite de la présente description. La figure 4 représente un premier exemple d'assemblage entre le cadre avant 2 et la paroi extérieure de la partie antérieure de nacelle conforme à l'invention. Dans cet exemple, la paroi extérieure comporte un élément de montage 7.

L'élément de montage 7 saille d'une surface interne de la paroi extérieure. L'élément de montage 7 s'étend ainsi à l'intérieur de la partie antérieure. On entend par zone interne de la partie antérieure la zone située dans l'épaisseur du profil aérodynamique, c'est-à-dire la zone délimitée par la surface externe (en contact avec le flux d'air) de la partie antérieure. En d'autres termes, la surface externe de la partie antérieure délimite la zone interne de la partie antérieure.

L'élément de montage 7 peut saillir d'une surface interne 13 de la partie extérieure 12 de la lèvre 1 ou d'une surface interne 41 du panneau extérieur 4, ou à la fois de la surface interne 13 de la partie extérieure 12 et de la surface interne 41 du panneau extérieur 4.

Dans ce premier exemple, l'élément de montage 7 est une pièce rapportée. En d'autres termes, l'élément de montage 7 est formé séparément de la paroi extérieure, par exemple par usinage ou fabrication additive notamment impression tridimensionnelle. L'élément de montage 7 est assemblé à la paroi extérieure par des moyens de fixation. En particulier, l'élément de montage 7 est assemblé à un bord de la lèvre 1, ou à la surface interne 41 du panneau extérieur 4, ou à la fois à la lèvre 1 et au panneau extérieur 4. Les moyens de fixation sont des moyens ne traversant pas la paroi extérieure, par exemple la soudure, brasure.

Le cadre avant 2 est relié à l'élément de montage 7 par des moyens d'assemblage 6. En particulier, le premier bord périphérique 21 du cadre avant 2 est lié à l'élément de montage 7. Les moyens d'assemblage 6 sont ici des rivets mais peuvent être d'autres moyens tels que la soudure, la brasure, etc.

Les termes moyens d'assemblage et moyens de fixation doivent être compris de façon équivalente. Ces deux termes sont utilisés afin de distinguer les moyens d'assemblage 6 permettant l'assemblage ou fixation du cadre avant 2 à la paroi extérieure, des moyens de fixation permettant d'assembler ou de fixer l'élément de montage 7 à la paroi extérieure de la partie antérieure lorsque l'élément de montage 7 est une pièce rapportée.

L'élément de montage 7 est dans ce premier exemple une cornière. La cornière comprend une première branche 70 s'étendant sensiblement parallèlement à la paroi extérieure, une deuxième branche 71 s'étendant sensiblement parallèlement au cadre avant 2, et une branche de raccord 72 reliant la première branche 70 à la deuxième branche 71. La première branche 70 et la deuxième branche 71 s'étendent ainsi sensiblement orthogonalement l'une par rapport à l'autre. La branche de raccord 72 relie les première branche 70 et deuxième branche 71 en formant un angle sensiblement droit, ce qui permet d'éviter de courber le cadre avant 2 pour la liaison du cadre avant 2 à la paroi extérieure. La première branche 70 de la cornière est fixée à la surface interne de la paroi extérieure. La deuxième branche 71 de la cornière est fixée au premier bord périphérique 21 du cadre avant 2.

Les figures 5 et 6 représentent d'autres exemples de réalisation dans lesquels l'élément de montage 7 est également une pièce rapportée.

En particulier, l'élément de montage 7 de l'exemple de la figure 5 est un élément raidisseur. On entend par élément raidisseur un élément permettant de renforcer ou rigidifier la structure de la paroi extérieure. L'élément raidisseur est ici un élément creux comportant une âme 71 prolongée de part et d'autre par deux ailes 72, et deux semelles 73 prolongeant respectivement les deux ailes 72. L'âme 71 et les deux ailes 72 présentent ensemble une section transversale trapézoïdale. Les semelles 73 s'étendent sensiblement parallèlement à l'âme 71. L'âme 71 et les semelles 73 s'étendent parallèlement à la paroi extérieure. Les semelles 72 de l'élément raidisseur sont fixées à la surface interne de la paroi extérieure. Le premier bord périphérique 21 du cadre avant 2 est fixé à l'âme 71 de l'élément raidisseur par des moyens de fixation. Dans un autre exemple de réalisation, l'élément de montage 7 est formé d'un seul tenant avec la lèvre 1 ou le panneau extérieur 4, par exemple par usinage, ou fabrication additive notamment impression tridimensionnelle. En d'autres termes, l'élément de montage 7 et la lèvre 1 peuvent former une seule et même pièce. De même, l'élément de montage 7 et le panneau extérieur 4 peuvent former une seule et même pièce. Ou encore, l'élément de montage 7, la lèvre 1 et le panneau extérieur 4 peuvent former une seule et même pièce.

A titre d'exemple non limitatif, lorsque la lèvre 1 est obtenue par usinage, une patte de liaison peut être par exemple directement intégrée. Cet exemple est illustré notamment à la figure 6 où l'élément de montage 7 est une patte de fixation. La lèvre 1 présente ainsi une forme en Y. Une première extrémité 74 de la patte de fixation est fixée à la surface interne de la paroi extérieure. Le premier bord périphérique 21 du cadre avant 2 est fixé à une deuxième extrémité 75 de la patte de fixation.

Dans un exemple similaire illustré à la figure 7, la patte de liaison peut être formée dans le panneau extérieur 4 plutôt que la lèvre 1. Le panneau extérieur présente alors une forme en Y. Dans le mode de réalisation illustré, la lèvre 1 et le panneau extérieur sont en outre assemblés entre eux par emboîtement.

Plus l'élément de montage 7 est de grandes dimensions, plus les moyens d'assemblage 6 entre le cadre avant 2 et la paroi extérieure sont éloignés de la surface externe de la nacelle. Il en résulte que le risque de déformation est limité par l'emploi d'un élément de montage relativement grand, car l'élément de montage permet la reprise de certaines contraintes mécaniques exercées au niveau du cadre avant et des liaisons entre le cadre avant et ledit élément de montage 7.

La figure 8 représente un mode de réalisation dans lequel l'élément de montage 7 est formé par une surépaisseur 70 saillant de la surface interne de la paroi extérieure. Le cadre avant 2 est lié à la surépaisseur 70 de la paroi extérieure. Selon les exemples, la surépaisseur 70 peut être formée dans la surface interne 17 de la lèvre 1, ou dans la surface interne 41 du panneau extérieur 4, ou dans les surfaces internes 13, 40 des deux. La liaison se fait sur tout le pourtour du bord périphérique 21 du cadre avant 2. Le cadre avant 2, en particulier le premier bord périphérique 21 du cadre avant 2, est assemblé à la surépaisseur 70 saillant de la surface interne de la paroi extérieure par des moyens d'assemblage 6 ne traversant pas la paroi extérieure, par exemple par soudure ou brasure.

Dans l'exemple représenté à la figure 8, deux rangées de soudure 60 permettent l'assemblage du premier bord périphérique 21 du cadre avant 2 à la surépaisseur 70. La surépaisseur 70 est dimensionnée de sorte à empêcher toute déformation de la paroi extérieure. L'épaisseur du panneau extérieur 4 mesurée au niveau de la surépaisseur 70 est supérieure à l'épaisseur du premier bord périphérique 21 du cadre avant 2. Cela permet également d'éviter la déformation de la paroi extérieure.

La figure 9 représente un exemple alternatif dans lequel la paroi extérieure de la partie antérieure comprend un logement 76. Le logement 76 est ici formé dans le panneau extérieur 4 à l'intérieur de la nacelle. Le logement 72 et le premier bord périphérique 21 présentent des formes et dimensions complémentaires. Le logement 76 présente ici une section sensiblement rectangulaire et des dimensions sensiblement égales à celles du cadre avant. Ainsi, le logement 76 est configuré pour recevoir et maintenir fixe le premier bord périphérique 21 du cadre avant 2 par complémentarité de formes. En d'autres termes, le logement forme en tout ou partie les moyens d'assemblage 6. Afin de permettre un bon maintien du cadre avant 2 dans le logement, le premier bord périphérique 21 peut être en outre collé ou soudé à la paroi extérieure. La colle, l'adhésif ou la soudure peuvent être appliqués sur l'interface entre le premier bord périphérique 21 et le logement 76.

L'utilisation de l'une ou l'autre parmi la colle et la soudure dépend notamment de la nature du matériau constituant la paroi extérieure. La soudure ou la colle peut être utilisée pour une paroi extérieure en métal. La colle peut être également utilisée pour une paroi extérieure en matériaux composites mais elle doit avoir des propriétés mécaniques similaires à celles des résines des composites. L'adhésif doit résister aux hautes températures auxquelles sont soumis les composants de l'ensemble propulsif. L'adhésif peut donc être des polyépoxydes ou époxy résistant à des températures allant jusqu'à 150°C, des polymères polyamides résistant à des températures supérieures à 200°C, des polymères BMI dont la température d'application est comprise entre celle des résines époxy et celle des polyamides, des polymères phtalo-nitile qui gardent leurs caractéristiques mécaniques pour des températures comprises entre -54° C et 343°C ou encore des résines cyanate ester ayant une bonne compatibilité avec les autres résines.

Dans tous les exemples décrits ci-avant, le cadre avant 2 et la paroi extérieure de la partie antérieure sont liés entre eux par des moyens d'assemblage 6 situés à l'intérieur de la partie antérieure. Ainsi, les moyens d'assemblage 6 ne traversent pas la paroi extérieure.

Cela permet ainsi d'assurer une continuité de la surface aérodynamique de la nacelle sans perturbation par des fixations. Le flux d'air s'écoulant sur la surface externe de la nacelle est bien laminaire et la trainée est réduite.

Bien que cela soit visible uniquement sur la figure 8, dans tous les exemples précédemment décrits, le deuxième bord périphérique 22 du cadre avant 2 est lié à la structure intérieure 3. Le deuxième bord périphérique 22 est lié par exemple par rivetage. Lorsque le premier bord périphérique 21 est lié à la paroi extérieure par soudure, l'utilisation de rivets au niveau du deuxième bord périphérique 22 permet une bonne reprise des efforts dans le cadre avant 2.

Dans un exemple de réalisation, le cadre avant 2 comporte au moins deux parties radiales 24, 25. Les parties radiales 24, 25 sont assemblées entre elles par des éléments de fixation démontables par exemple des boulons. Cela permet le montage et le démontage du cadre avant et facilite ainsi l'accès à l'entrée d'air, très utile pour la maintenance et la réparation de l'ensemble propulsif. Cette configuration en plusieurs parties radiales est nécessaire lorsque le premier bord périphérique 21 du cadre avant 2 ne peut pas être désassemblé ou séparé de la paroi extérieure, par exemple pour un assemblage par emboitement collé tel que décrit en référence à la figure 9.

Par ailleurs, le cadre avant 2, généralement en métal, est sujet à une importante dilatation thermique due à de grands écarts de température. En effet, l'air à l'intérieur de la nacelle s'écoule à une température avoisinant les 400°C notamment afin d'assurer la fonction de dégivrage, tandis qu'à l'extérieur de la nacelle, la température de l'air avoisine des valeurs négatives de l'ordre de -50° C. L'écart de température entre l'intérieur et l'extérieur de la nacelle provoque la dilatation du cadre avant. La figure 8 représente schématiquement en pointillés la dilation du cadre avant 2.

Dans l'exemple représenté à cette figure, le cadre avant 2 comprend une partie supérieure 23 prolongeant directement le premier bord périphérique 21 assemblé à la paroi extérieure. La partie supérieure 23 s'étend sensiblement parallèlement à l'axe longitudinal L. Le cadre avant 2 présente ainsi des contours sensiblement similaires aux contours de la lèvre 21. La partie supérieure 23 présente une épaisseur réduite par rapport au reste du cadre avant et une longueur comprise entre 20 mm et 100 mm. L'épaisseur réduite est comprise entre 0,5 et 1 mm, de préférence de l'ordre de 0,8. Ainsi, la partie supérieure 23 est peu courbée comparée au reste du cadre avant 2. La partie supérieure 23 présentant une faible épaisseur et une faible courbure, fait ainsi office d'amortisseur de dilatation, puisque la dilatation ou déformation du cadre avant s'effectue principalement à cet endroit.

Le cadre avant 2 ayant une partie supérieure 23 ainsi constituée, se dilate sans affecter la paroi extérieure. Ceci n'est pas le cas pour les cadres avant de l'art antérieur qui du fait qu'ils sont liés par rivetage à la paroi extérieure, déforment cette dernière lors de leur dilatation, ce qui modifie le profil aérodynamique de la nacelle. Ainsi, le cadre avant 2 peut se déformer sans impact sur le profil aérodynamique de la nacelle. Cela améliore également le caractère laminaire des flux d'air s'écoulant à la surface externe de la nacelle, en particulier à la surface externe de sa partie antérieure.

La présente invention propose une structure de partie antérieure de nacelle et en particulier une liaison entre le cadre avant et la paroi extérieure de la partie antérieure permettant d'assurer la continuité de la surface aérodynamique de la partie antérieure et par conséquent un écoulement laminaire de l'air à la surface de la nacelle.

## Revendications

1. Partie antérieure de nacelle d'un ensemble propulsif d'aéronef (A), ladite partie antérieure (P1) ayant une extrémité avant permettant l'entrée d'air et une extrémité arrière destinée à être liée au reste de la nacelle, ladite partie antérieure comprenant :
- une lèvre d'entrée d'air (1) disposée à ladite extrémité avant et comprenant un bord d'attaque (10), une partie extérieure (12) et une partie intérieure (11) délimitées par ledit bord d'attaque (10),
- un panneau extérieur (4) prolongeant la partie extérieure (12) de la lèvre d'entrée d'air, ledit panneau extérieur (4) et ladite partie extérieure (12) de la lèvre d'entrée d'air (1) formant ensemble une paroi extérieure de la partie antérieure (P1),
- une structure intérieure (3) prolongeant la partie intérieure (11) de la lèvre d'entrée d'air,
- un cadre avant (2) disposé à l'arrière de la lèvre d'entrée d'air et reliant ladite paroi extérieure à ladite lèvre d'entrée d'air (1) ou à ladite structure intérieure (3), ledit cadre avant (2) comprenant un premier bord périphérique (21) lié à ladite paroi extérieure, et un deuxième bord périphérique (22) lié à ladite structure intérieure (3) et/ou à la partie intérieure (11) de la lèvre d'entrée d'air,
- un élément de montage (7) de la paroi extérieure de la partie antérieure (P1) s'étendant à l'intérieur de la partie antérieure (P1) et saillant d'une surface interne (13 ; 41) de la partie antérieure (P1),
dans laquelle ledit cadre avant (2) et l'élément (7) de montage de ladite paroi extérieure de la partie antérieure (P1) sont liés entre eux par des moyens d'assemblage situés dans une zone interne de ladite partie antérieure (P1) de sorte que lesdits moyens d'assemblage ne traversent pas ladite paroi extérieure, ledit élément de montage (7) se présentant sous la forme d'une patte de fixation dont une deuxième extrémité est fixée au premier bord périphérique du cadre avant (2) par lesdits moyens d'assemblage, **caractérisée en ce que** l'élément de montage (7) est formé d'un seul tenant avec la lèvre d'entrée d'air (1) ou le panneau extérieur (4), et **en ce que** ladite lèvre d'entrée d'air (1) ou ledit panneau extérieur (4) présente une forme de Y.

2. Partie antérieure de nacelle selon la revendication 1, dans laquelle les moyens d'assemblage sont des éléments de fixation rapportés, par exemple des rivets.

3. Partie antérieure de nacelle selon la revendication 1, dans laquelle le premier bord périphérique (21) du cadre avant (2) est lié à la paroi extérieure par soudure brasure ou collage, la soudure, brasure ou le collage formant lesdits moyens d'assemblage.

4. Partie antérieure de nacelle selon l'une des revendications précédentes, dans laquelle le cadre avant (2) comporte au moins deux parties radiales (24,25), lesdites parties radiales (24, 25) étant assemblées entre elles par des éléments de fixation démontables.

5. Partie antérieure de nacelle selon l'une des revendications précédentes, dans laquelle l'élément de montage (7) est formé d'un seul tenant avec le panneau extérieur (4) présentant une forme de Y, et la lèvre d'entrée d'air (1) et le panneau extérieur (4) sont assemblés par emboîtement.

6. Nacelle (N) de groupe propulsif d'aéronef comportant une partie antérieure conforme à l'une des revendications précédentes.

## Patentansprüche

1. Frontteil einer Gondel einer Antriebsgruppe eines Luftfahrzeugs (A), wobei der Frontteil (P1) ein vorderes Ende für den Eintritt von Luft und ein hinteres Ende, das dazu bestimmt ist, mit dem Rest der Gondel verbunden zu sein, aufweist, wobei der Frontteil Folgendes beinhaltet:
- eine Lufteintrittslippe (1), die an dem vorderen Ende angeordnet ist und eine Anströmkante (10), einen Außenteil (12) und einen Innenteil (11), die durch die Anströmkante (10) begrenzt werden, beinhaltet,
- eine Außenplatte (4), die den Außenteil (12) der Lufteintrittslippe verlängert, wobei die Außenplatte (4) und der Außenteil (12) der Lufteintrittslippe (1) gemeinsam eine Außenwand des Frontteils (P1) bilden,
- eine Innenstruktur (3), die den Innenteil (11) der Lufteintrittslippe verlängert,
- einen Frontrahmen (2), der hinter der Lufteintrittslippe angeordnet ist und die Außenwand mit der Lufteintrittslippe (1) oder der Innenstruktur (3) verbindet, wobei der Frontrahmen (2) eine erste Umfangskante (21), die mit der Außenwand verbunden ist, und eine zweite Umfangskante (22), die mit der Innenstruktur (3) und/oder dem Innenteil (11) der Lufteintrittslippe verbunden ist, beinhaltet,
- ein Montageelement (7) der Außenwand des Frontteils (P1), das sich innerhalb des Frontteils (P1) erstreckt und von einer Innenoberfläche (13; 41) des Frontteils (P1) vorsteht,
wobei der Frontrahmen (2) und das Montageelement (7) der Außenwand des Frontteils (P1) durch Montagemittel miteinander verbunden sind, die sich in einem Innenbereich des Frontteils (P1) befinden, sodass die Montagemittel die Außenwand nicht durchdringen, wobei das Montageelement (7) in Form einer Befestigungslasche vorliegt, von der ein zweites Ende durch die Montagemittel an der ersten Umfangskante des Frontrahmens (2) befestigt ist, **dadurch gekennzeichnet, dass** das Montageelement (7) mit der Lufteintrittslippe (1) oder der Außenplatte (4) einstückig ausgebildet ist und dass die Lufteintrittslippe (1) oder die Außenplatte (4) eine Y-Form aufweist.

2. Frontteil einer Gondel nach Anspruch 1, wobei die Montagemittel angefügte Befestigungselemente, beispielsweise Nieten, sind.

3. Frontteil einer Gondel nach Anspruch 1, wobei die erste Umfangskante (21) des Frontrahmens (2) durch Schweißen, Löten oder Kleben mit der Außenwand verbunden ist, wobei die Schweißnaht, die Lötnaht oder die Klebenaht die Montagemittel bildet.

4. Frontteil einer Gondel nach einem der vorhergehenden Ansprüche, wobei der Frontrahmen (2) mindestens zwei radiale Teile (24, 25) umfasst, wobei die radialen Teile (24, 25) durch demontierbare Befestigungselemente zusammengefügt sind.

5. Frontteil einer Gondel nach einem der vorhergehenden Ansprüche, wobei das Montageelement (7) mit der Außenplatte (4), die eine Y-Form aufweist, einstückig ausgebildet ist und die Lufteintrittslippe (1) und die Außenplatte (4) durch Einstecken zusammengefügt sind.

6. Gondel (N) einer Antriebsgruppe eines Luftfahrzeugs, die einen Frontteil gemäß einem der vorhergehenden Ansprüche umfasst.

## Claims

1. Anterior part of a nacelle of a propulsion assembly of an aircraft (A), said anterior part (P1) having a front end allowing air to enter and a rear end intended to be connected to the rest of the nacelle, said anterior part comprising:
- an air intake lip (1) disposed at said front end and comprising a leading edge (10) and an outer part (12) and an inner part (11) that are delimited by said leading edge (10),
- an outer panel (4) that extends the outer part (12) of the air intake lip, said outer panel (4) and said outer part (12) of the air intake lip (1) together forming an outer wall of the anterior part (P1),
- an inner structure (3) that extends the inner part (11) of the air intake lip,
- a front frame (2) disposed behind the air intake lip and connecting said outer wall to said air intake lip (1) or to said inner structure (3), said front frame (2) comprising a first peripheral edge (21) connected to said outer wall, and a second peripheral edge (22) connected to said inner structure (3) and/or to the inner part (11) of the air intake lip,
- a mounting element (7) of the outer wall of the anterior part (P1) that extends inside the anterior part (P1) and projects from an inner surface (13; 41) of the anterior part (P1),
wherein said front frame (2) and the mounting element (7) of said outer wall of the anterior part (P1) are connected to one another by assembly means located in an inner zone of said anterior part (P1) such that said assembly means do not penetrate said outer wall, said mounting element (7) taking the form of a fastening tab of which a second end is fastened to the first peripheral edge of the front frame (2) by said assembly means,
**characterized in that** the mounting element (7) is formed in one piece with the air intake lip (1) or the outer panel (4), and **in that** said air intake lip (1) or said outer panel (4) has a Y shape.

2. Nacelle anterior part according to Claim 1, wherein the assembly means are added fastening elements, for example rivets.

3. Nacelle anterior part according to Claim 1, wherein the first peripheral edge (21) of the front frame (2) is connected to the outer wall by welding, soldering or gluing, the welding, soldering or gluing forming said assembly means.

4. Nacelle anterior part according to one of the preceding claims, wherein the front frame (2) has at least two radial parts (24, 25), said radial parts (24, 25) being joined to one another by removable fastening elements.

5. Nacelle anterior part according to one of the preceding claims, wherein the mounting element (7) is formed in one piece with the outer panel (4) having a Y shape, and the air intake lip (1) and the outer panel (4) are assembled by nesting.

6. Nacelle (N) of an aircraft propulsion unit, having an anterior part in accordance with one of the preceding claims.
